# EUROPEAN PATENT APPLICATION

(11) **EP 2 583 727 A1**
(43) Date of publication of application: **24.04.2013**
(21) Application number: 11798435.1
(22) Date of filing: 14.06.2011
(51) Int. Cl.: A63F 13/00

(54) **METHOD AND SYSTEM FOR CONDUCTING INTERACTIVE GAMES**

(30) Priority: 21.06.2010 RU 2010125321
(71) Applicant: Ivanov, Valeriy Fillipovich, Moscow 111555 (RU); Fetisov, Vyacheslav Aleksandrovich, Moscow 103001 (RU)
(72) Inventor: Ivanov, Valeriy Fillipovich, Moscow 111555 (RU); Fetisov, Vyacheslav Aleksandrovich, Moscow 103001 (RU)
(74) Representative: Isarpatent
(86) International application number: PCT/RU2011/000411
(87) International publication number: WO 2011/162638

(57) **Abstract**

The invention relates to systems for conducting interactive gaming measures, in particular to methods and systems intended for conducting interactive games, lotteries and sporting totalizators. The proposed system comprises a central Computer (12) which is coupled to a data transmission Channel (14) and to a precision time sensor (13) 00 and is connected via a communications Channel (11) to an information processing center (9), which is coupled to a return Channel (15). In addition, the system comprises individual memory devices (8) and a specific number of control units (7), each of which has an auxiliary microprocessor (22), which is connected to a set number of data interchange adapters (25), a display (26), a control memory (24) and an input device (20). Furthermore, each individual memory device (8) has an adapter (30) for interfacing with the control unit, it being possible for said adapter to be coupled to any desired data interchange adapter (25).

## Description

### Art

This invention provides methods for conducting game-playing events, in particular, methods and systems for conducting interactive games, lotteries and sporting totalizators.

### Prior Art

Today all information systems that are designed, in particular, for conducting interactive games and include a least one central PC and terminal devices connected to it (continuously or intermittently) can be grouped in two large categories. The first category includes systems which have no provisions for capturing and memorizing the time of entering or saving information related to conducting lotteries or other game-playing events directly in the terminal device. This is accounted for by the fact that such systems operate in an on-line mode, i.e. are continuously connected to a central computer, which carries out complete processing of data (including, if necessary, the time of input of such data, which is recorded in the central computer). The central computer usually processes data by comparing it to true data received by the participant of the game-playing event from its source. Information systems of the first kind are described in several patents and differ from each other mostly in data processing algorithms and in principles of data formation and protection against unauthorized changes (e.g. those initiated by the participant of the game-playing event). An example of such system is an interactive gaming system described in US Patent No.687199; in this system, a TV set is used as the terminal display. The peculiarity of such system consists in that all the intended information can be entered by the participant by means of selecting the appropriate graphical image on the screen. The principal disadvantage of the systems of the first kind is the necessity to keep all terminal devices constantly connected to the central computer; when there are too many participants in the game, this may trigger reload of the central computer and occurrence of multifarious time delays in the processing of information. The second category includes electronic information systems, in which each of the participants uses off-line terminal devices made in the form of individual memory devices, which memorize information and the time of such memorizing. The second category may be split into two groups. The first (and predominant) group includes systems where the source of exact time or the source of the signal for synchronizing such exact time is located beyond the individual memory device, but is constantly or intermittently connected to it via the appropriate communication channels. In such systems, processing of data recorded in the individual memory device consists in processing of the recorded information taking into account the real time at which such information was recorded, according to the abovementioned exact time source, Such processing is carried out (directly in the individual memory device or in the central computer connected thereto) in accordance with rules prescribed by organizing of the respective game-playing event. Typical information systems of Group 1 are described in US Patent No.4592546 and in US Patent No.5526035. In the latter one, synchronization of the internal timer of the individual memory device is achieved by means of intermittent transmission of a special signal via a TV data transmission channel. In US Patent No.4592546, data specifying real time are transmitted to the input of a digital FM receiver, which is part of the individual memory device. After conversion, such data are used to implement time correction of the timer of the individual memory device. The principal disadvantage of devices of Group 1 consists in the necessity to have an additional communications channel between the individual memory device and the source of exact time signals. It can be noted that the availability of the additional communications channel, apart from making the system and the individual memory device more expensive, also causes certain difficulties in use of the system at locations where the passing of the exact time signals via the additional channel involves high attenuation of the signal. Information systems of the second group are free from the abovementioned disadvantages, since they include a precision time counter, which carries out exact time reckoning, and is not in any way connected to individual memory devices. This is brought about by the fact that the exact time of recording the information related to the respective game-playing event is computed by the central computer after completion of such event, based on the time data provided by timers, which are included in individual memory devices. Examples of systems of Group 2 can be found in EA Patent No.010454 and in US Patent No.7037193. EA Patent No.010454 describes a system for conducting interactive games, which comprises a central computer coupled to a data transmission channel and to a precision time sensor, and is connected, via a communications channel, to an information processing center, which is coupled to a return channel; in addition, the system comprises individual memory devices, each of which is designed for memorizing information relating to the interactive game and generated by the participant of such game, and comprises a microprocessor, a memory, and a timer, which are interconnected. US Patent No.7037193 describes a method of using such system. According to this method, each of the participants of the interactive game uses a specific number of individual memory devices, each of which has a serial number, and is intended for concurrent recording, to its memory, of the time data from the timer, and information related to the interactive game; besides, the instants of time at which such information was recorded are computed by the central computer coupled to the precision time sensor (as soon as current time data from the timer are transmitted to the computer via the data transmission channel) and by the information processing center coupled to the central computer (as soon as time data and appropriate information, which is stored in the memory of the individual memory devices, are transmitted to the information processing center via the return channel).

The disadvantage of such systems consists in the fact that their individual memory devices have certain limitations for their use in various interactive games due to their non-multipurpose nature, since they include components that are pre-matched with components of the information system, within the scope of which the interactive game is conducted. Thus, for example, it is imperative that the output device, which is essentially one of the principal components of the individual memory device, be matched both with the abovementioned data transmission channel and with the return channel of the information processing center. On the other hand, different operators of interactive games may be serviced by several information processing centers, each of which may use its own communications standard (in particular, in the return channel). Currently, there are a large number of actively used standards, both in the sphere of mobile radio communications (GSM, D-AMPS, CDMA, etc.) and in the Internet (TCP/IP, FTP, etc). It is obvious that concurrent use of such standards in a mobile individual memory device is practically always results in the device's becoming much more expensive. Similar problems may occur with other components of an individual memory device as well (e.g. with the data input device, the micro-processor, and the memory). The data input devices are currently designed in the form of a keyboard which is either part of the individual memory device itself or (as described in EA Patent No.010454) part of a TV-monitor, with which it is rigidly coupled by means of a special jack and by means of software, which is stored in the memory of the individual memory device. On the other hand, there are other information input devices, which are sometimes more convenient for participants of interactive games. For example, the data input technique, which is based on detection of motions of the participant's hand holding the individual memory device, is convenient for use directly at the location of the interactive game. Another commonly used input technique consists in use of touchscreens, which allow data input by means of finger-tapping. However, concurrent use of such techniques in the known individual memory devices is not possible in view of their design, which includes inseparably connected software and hardware components. The same is applicable to components of an individual memory device that should be tamper-proof, such as the microprocessor and the memory. Such elements contain software, which includes, in particular, certain user interface programs that may turn out to be not suitable for some versions of interactive games.

Common disadvantage of all known systems that involve use of several individual memory devices by a single participant consists in absence of provisions for simultaneous recording of information related to the interactive game. This limits the opportunities for participation in the event for participants who wish to increase the probability of their winning by using several individual memory devices. In view of the above, purpose of this invention is to create a method and system for conducting interactive games that are free from disadvantages mentioned above.

### Disclosure of the Invention

The principal problem to be solved by the invention consists in creating an individual memory device, which would contain components performing the function of storing information and memorizing time data of the timer. Functions of data generation and transmission to the central computer and to the information processing center are to be carried out by another device.

The problems described above are solved by the design of the system for conducting interactive games. The system comprises a central computer, which is coupled to a data transmission channel and to a precision time sensor, and is connected, via a communications channel, to an information processing center, which is coupled to a return channel; in addition, the system comprises individual memory devices, each of which is designed for memorizing information relating to the interactive game and generated by the participant of such game, and comprises a microprocessor, a memory, and a timer, which are interconnected. Besides, the system comprises a specific number of control units, each of which has an auxiliary microprocessor, which is connected to a set number of data interchange adapters, a display, a control memory, and an input device. Furthermore, each individual memory device has an adapter for interfacing with the control unit, it being possible for said adapter to be coupled to any desired data interchange adapter. The adapter for interfacing is connected to the microprocessor, the memory, and the timer; the respective control units of individual memory devices comprise an adapter for data transmission channel, which is coupled to the auxiliary microprocessor, and an adapter for the return channel, which is connected with the auxiliary microprocessor as well.

Furthermore, the invention describes the method of using such system. According to this method, each of the participants of the interactive game uses a specific number of individual memory devices, each of which has a serial number, and is intended for concurrent recording, to its memory, of the time data from the timer, and information related to the interactive game; besides, the instants of time at which such information was recorded are computed by the central computer coupled to the precision time sensor (as soon as current time data from the timer are transmitted to the computer via the data transmission channel) and by the information processing center coupled to the central computer (as soon as time data and appropriate information, which is stored in the memory of the individual memory devices, are transmitted to the information processing center via the return channel). The method also involves the recording, to the control memory, of control software in order to generate, on the display of the control, unit user interface elements, which are needed for generating initial information. Generation of interactive game-related information for each of the individual memory devices is carried out in the control unit by means of conversion of the initial information in accordance with a special algorithm included in the control unit.

Other features and advantages of the invention will be clarified by its detailed description and by Claims 1 thru 14.

### Brief Description of Drawings

The invention is supported by the enclosed drawings including:
Fig.1 illustrating the interaction between the participant of the interactive game and the control unit;
Fig.2 showing a generalized schematic of the system for conducting interactive games;
Fig.3 showing a block diagram of the control unit and individual memory device;
Fig.4 illustrating the first variant for connecting the individual memory device to the control unit in the form of a PC;
Fig.5 illustrating the second variant for connecting the individual memory device to the control unit in the form of a PC;
Fig.6 illustrating connection of the individual memory device to the control unit in the form of a PDA;
Fig.7 illustrating connection of the individual memory device to the control unit in the form of a communicator;
Fig.8 illustrating a user interface generated by the control unit without any individual memory device connected thereto;
Fig.9 illustrating a user interface generated by the control unit with individual memory devices connected thereto;
Fig.10 illustrating the scheme of the algorithm for generation of parameter values, which are needed for computing the time of data recording;
Fig.11 illustrating the scheme of the algorithm for interaction of the individual memory device and the information processing center;
Fig.12 illustrating the scheme of the final processing algorithm

### Preferred Embodiments of Invention

In describing the preferred variants of systems implementing this invention we will use for them the abbreviation of IIIS. This abbreviation is comprised of initial letters of the full title of the system implementing the invention, i.e. Improved Interactive Information System (IIIS). For convenience of description, all abbreviations placed hereinafter after underlined expressions will be comprised of initial letters of the words comprising such expression.

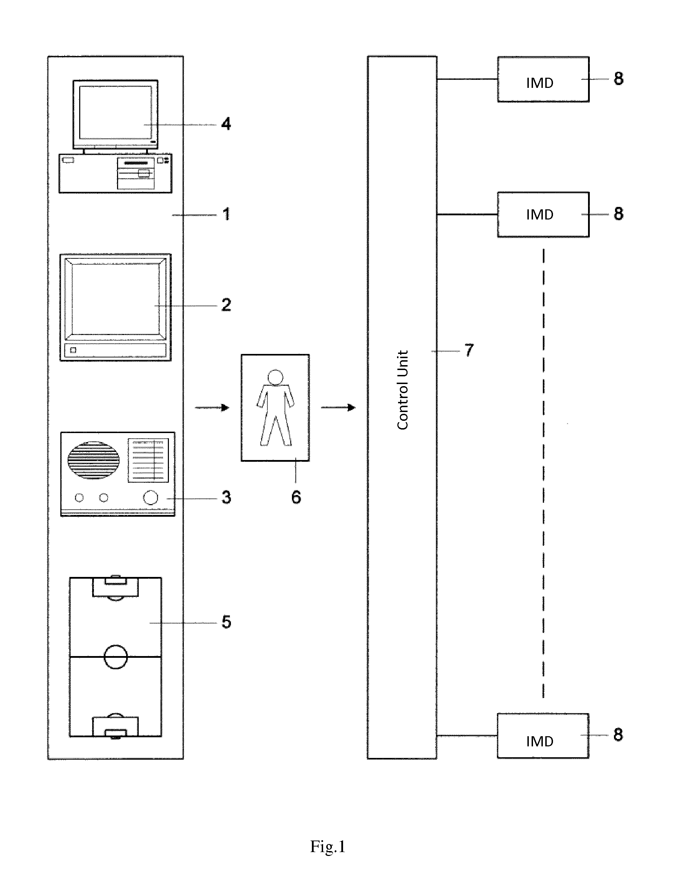

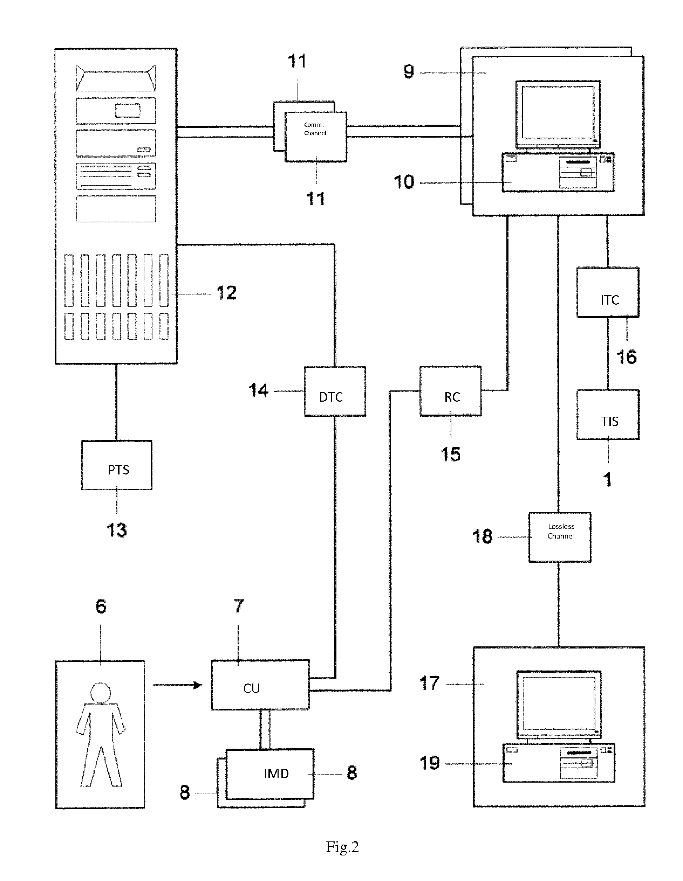

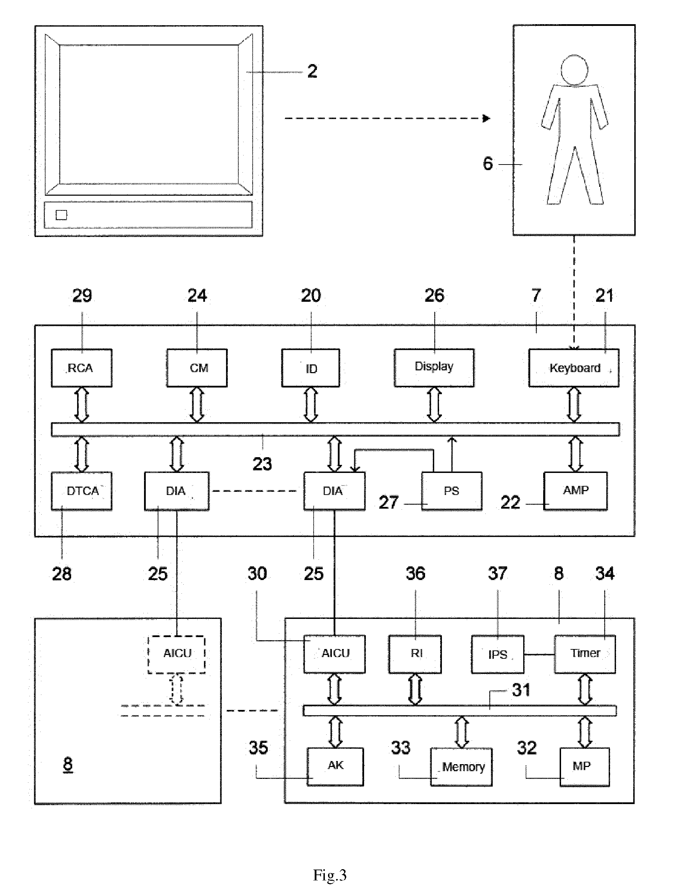

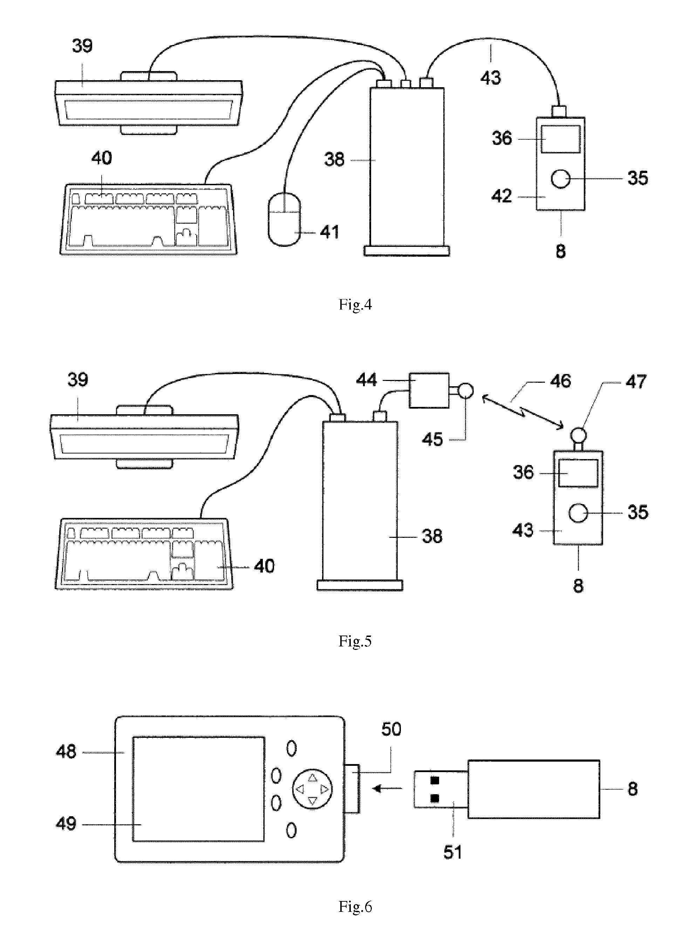

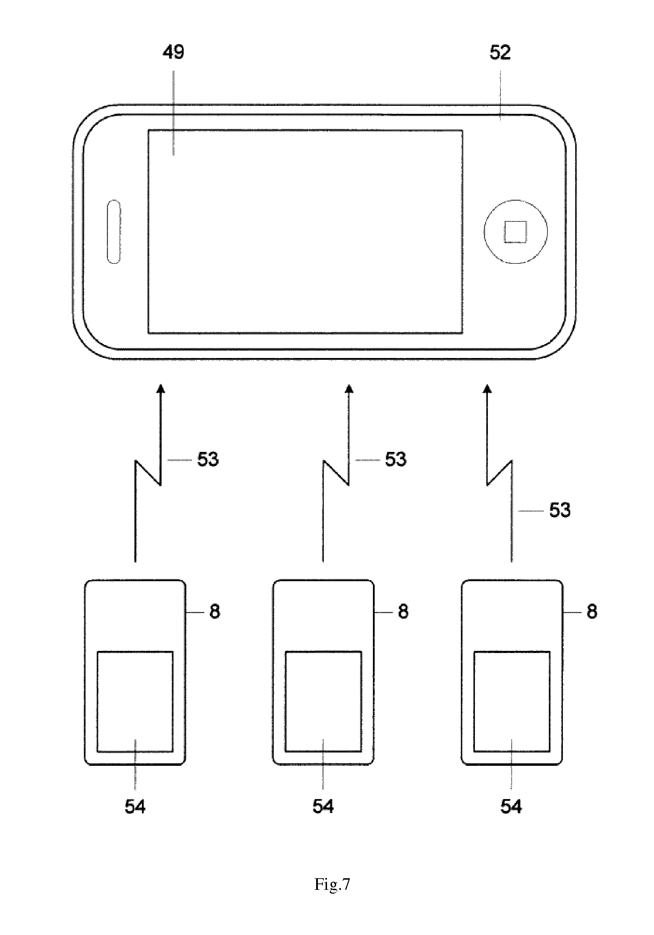

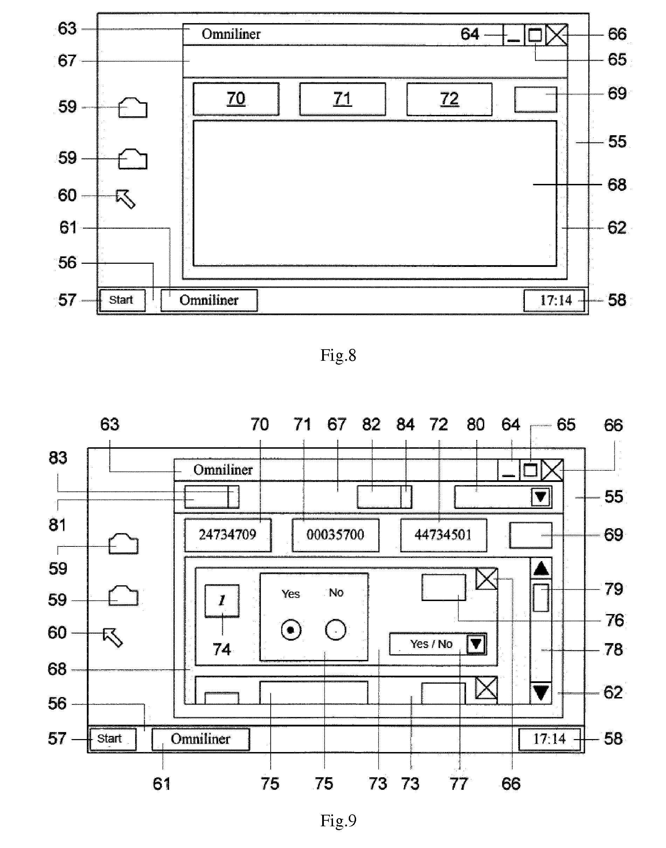

In Fig.1, position 1 is the True Information Source (TIS). The True Information (TI): I(M) = I₁(M), ... I_{z}(M), ... I_{z}(M) contains a population of actions I_{z}(M) (z = 1, 2, ..., Z) or events relating to M (M = 1, 2, ...) interactive game - or just to M game. As TIS (1), one can use a TV set (2), a radio receiver (3), or a personal computer (PC) (4) connected to the Internet. Any M game (for example, a football match conducted on a football ground (5)) can be taken as another TIS (1). Via the TV set (2), the radio receiver (3) or the PC (4), the participant (6) of, say, a chess quiz (e.g. the one broadcasted via the Internet) can obtain true information I(M) relating to the current chess situation, and, using the Control Unit (CU), operating in the off-line or on-line mode, generate initial information I*(M) = I₁*(M), I₂*(M), ... Iₘ*(M) comprising a certain number of m (m = 1, 2, ...) members Iₘ*(M) relating to M game. The member Iₘ*(M) may be understood, for example, as an intended move in a chess game. The peculiarity of the Control Unit (7) consists in the possibility to connect a specific number v (v = 1, 2, ..., V) of Individual Memory Devices (IMD) (8) to it, each of such IMDs having a serial number k, and designed for memorizing Control Unit-generated information I(M, k) = I₁(M, k), ... Iᵢ(M, k), ... Iᵣ(M, k) comprising a certain number (r) of records Iᵢ(M, k), relating to M game (i being the number of the record). Information I(M, k) is generated by the Control Unit (7) after conversion of the initial information I*(M) in accordance with a special algorithm. In the simplest case, for example, with a single IMD (8) connected to the Control Unit (7) (V = 1), the initial information I*(M) may coincide with information I(M, k), i.e. I*(M) = I(M, k). In another variant, the memorizing of the initial information I*(M) may occur without any conversion in the Control Unit (7). In such a case, initial information I*(M) and information I(M, k) will coincide. Conversion of the recorded information I(M, k) may occur in the Information Processing Center (IPC) (9) (Fig.2), which comprises a Data Processing Computer (DPC) (10) coupled via the Communications Channel (CommC) (11) to the Central Computer (CC) (12). If the IIIS includes several IPCs (9), then, with several M (M>1) interactive games, each of such IPCs (9) can carry out processing of the recorded information I(M, k) for one game only. The latter is coupled to the Precision Time Sensor (PTS) (13). Such processing of the recorded information I(M, k) is performed as soon as the appropriate data are transmitted from IMD (8) to the Central Computer (12) and to the IPC (9). The data are transmitted to the Central Computer (12) and to the IPC (9) via the Data Transmission Channel (DTC) (14) and the Return Channel (RC) (15) respectively. Information from the TIS (1) to the IPC (9) is transmitted via the Information Transmission Channel (ITC) (16). Besides, some IIIS versions may include an Identification Point (IP) (17) for IMDs, which is coupled via a Lossless Channel (LC) (18) with the IPC (9), and fitted with an Identification Computer (IC) (19). A "communication channel" (or simply "channel") is understood, for purposes of this document, as a combination of technical means and physical media for transmission of information (signals) from the sender to the recipient. The main technical devices, which a communications channel consists of, are: true information sensors, transmitters, receivers (in particular, those provided with terminal devices), signal amplifiers, coding and decoding devices, modulators and demodulators, switches, filters, modems etc. If a communication channel is formed by a set of computer networks, which are part of the Internet, the channel should additionally include such equipment as routers, servers, base stations, satellite communication lines, and other equipment controlled by the appropriate communications software. In such a case, for purposes of identifying the recipient, a unique address (the so-called IP address, expressed in 4 bytes) is assigned to each terminal system (whether it is a Central Computer, a Data Processing Computer or an Identification Computer). Information I*(M) is generated by the participant (6) using the Input Device (ID) (20) (Fig.3) or from the keyboard (21), which is part of the Control Unit (7). Its functioning is ensured by the Auxiliary Micro-Processor (AMP) (22), which is coupled by the bus (23) to the following components: Input Device (20), keyboard (21), Control Memory (CM) (24), predetermined number Ω (Ω = 1, 2, ...), Data Interchange Adapters (DIA) (25), and display (26). The control memory (24) is intended, in particular, for storing the Control Software (CS), and may include memory of various types (e.g. RAM and ROM). RAM is used to store data and programs for current computations as well as programs that should be quickly accessed in the event of an interruption in the course of computations. The interrupt mode allows the AMP (22) to interact with a lot of individual memory devices coupled to the Control Unit (7) and to use standard subprograms without repeating them in the process of working out the master program related to control of several IMDs (8). Components of the Control Unit (7) and components connected to the DIAs (25) are powered from Power Source (PS) (27). The display (26) provides the displaying of initial information I*(M) and information I(M, k). Peculiarity of the IIIS consists in the opportunity to use several Control Units (7). This enables the participant (6) to use control units, which offer optimum convenience in terms of entering the initial information I*(M) and information I(M, k) as well as in terms of transmitting such information via the DTC (14) or the RC (15). Apart from the abovementioned components, some control units may contain a Data Transmission Channel Adapter (DTCA) (28), which is coupled to the AMP (22), and a Return Channel Adapter (RCA) (29), which is coupled to the AMP (22). As has already been mentioned above, the Control Unit (7) may include provisions for coupling the specified number of IMDs (80 to it. Such coupling of the IMDs is performed via the Adapter for Interfacing with the Control Unit (AICU) (30). Design of the latter includes provisions for connection to the Control Unit (7) via an appropriate DIA (25). Except the AICU (30), the Individual Memory Device (IMD) (8) comprises a Micro-Processor (MP) (32), a memory (33), and a timer (34), which are interconnected. When chip cards are used within the IIIS, the IMDs (8) may contain a unit for connection of a chip card (i.e. removable carrier of data relating to M game and containing own built-in memory). Other noteworthy possible (but not mandatory) components of the IMD (8) are the Auxiliary Keyboard (AK) (35) and the Readiness Indicator (RI) (36), which is used to indicate readiness of the IMD for memorizing information I(M, k) coming from the Control Unit (7) coupled to the IMD (8). Among other auxiliary components of the IMD there is the Auxiliary Display (AD). Besides, the DIA (25) and the AICU (30) may be designed as wireless communication adapters matched to each other and utilizing such widely spread technologies as DECT or Bluetooth. In another version, a single DIA (25) may interact, by means of wireless communication, with several IMDs. The timer (34) is powered from one or more Internal Power Sources (IPS) (37). Other components of IMDs are powered via the DIA (25) and the AICU (30) from the Power Source (27), which is part of the Control Unit (7). In some versions of IMD design, its IPS (37) may have the form of a solar battery or an electric energy accumulator with provisions for connection to the Power Source (27) via the DIA (25) or the AICU (30). If, due to design peculiarities of the DIA (25) or the AICU (30), powering the components (30), (32), (33), and (36) from the Power Source (27) is not possible (e.g. when wireless communications are used), such components are powered from a separate power source, which is part of the IMD. The timer (34) may comprise a master generator and a counter. To ensure high stability, master generators utilize crystal frequency control. At the output of the master generator, pulses with a period of 0.01 to 0.1 seconds are generated. The pulses come to the input of the counter, which generates Time Data of the Timer (TDT) (N) with the pulse repetition rate of *f(k).* The database of f(k) frequencies for all individual memory devices, which are registered, for example, in the Central Computer (12), may be stored either in the Central Computer (12) or in the Data Processing Computer (10). It can be noted that examples of design of the timer (34) and its interaction with the memory (33) and the micro-processor (32) are provided in US Patent No.7037193. Time Data of the Timer, which are read from the output of the timer (34), which is part of the IMD having the serial number "k", in order to further be transmitted to the Central Computer (12), will be hereinafter referred to as Current Time Data (CTD) and designated as Nₜ(k). Time data of the timer that are read from the output of the timer (34) and are recorded simultaneously with information Iᵢ(M, k) to the memory (33) will hereinafter be referred to as Time Data (TD) and designated as N(i, k), where i is the number of record (i = 1, 2, ...). As we have already noted above, the peculiarity of the IIIS in question is the possibility to use a Control Unit (7), which will be the optimal one for participation in M interactive game. Thus, for example, if the participant (6) is staying at the football ground (5), the most convenient Control Unit (7) will be represented by a device of high robustness, minimum size, high economic efficiency, and low cost. To reduce the cost, such components as DTCA (28) and RCA (29) may be excluded from the Control Unit (7). Currently, there are quite a lot of known electronic devices, whose design is based on a Control Unit (7) coupled to the IMD. One of such devices is the harmless mobile cellular phone, which is described in US Patent No.7444116 and created by one of the authors of the invention presented herein. Among other electronic devices, which are based on the Control Unit (7), are a PC (4), a netbook, a smartbook, a communicator, a cameraphone, a smartphone, a PDA, and a Tablet PC (a touchpad tablet). As an example, let us now review peculiarities of IMD coupling to control units in the form of a PC or a communicator. Fig.4 and Fig.5 illustrate different variants of IMD (8) coupling to the Control Unit (7) designed as a PC (4). The latter comprises a System Unit (SU) (38), which is connected to a video monitor (39) that performs the function of the display (26), and to a Detachable Keyboard (DK), which performs the functions of the keyboard (21). Another input device for the PC is the mouse (41). The case (42) of both IMDs (8) is designed as an oblong parallelepiped. Its face panel accommodates an Auxiliary Keyboard (35) and a Readiness Indicator (36). The System Unit (36) is fitted with one or more DIAs (25), each of which operates in accordance with the USB standard and is provided with an appropriate USB port. An important property of the USB standard is the possibility to connect the IMD to the System Unit (38) without the need to reload the latter. The System Unit (38) is connected to the IMD (8) by a USB cable (43) or (as shown in Fig.5) by an external adapter (44) (for example, type Planet WL-U356A), which is part of the DIA (25). The external adapter is fitted with an antenna, and operates at a frequency of 2.4 GHz of electromagnetic flows (46) in 802.11g standard. Since the DIA (25) and the AICU (30) should operate in the same standard, Inter Pro Wireless 2200 b/g controller may be used as the AICU (30). The controller is capable of working with the external antenna (47) as well as with the internal one. Fig.6 shows a control unit, which is designed as a Palm Digital Assistant (PDA) (48). Its touchscreen (49) performs the functions of both the display (26) and the keyboard (21). Functions of the latter are performed by a virtual keyboard on the touchscreen (49), with which the participant (6) can interact by tapping it with his/her finger. Keyboard functions may also be performed by buttons on the face panel of the PDA (48). The IMD is connected to the PDA via a USB port, components of which (50 and 51) are part of the DIA (25) and the AICU (30). Fig.7 shows a control unit, which is used to control three IMDs (8) in a wireless mode, and is designed as a communicator (52) (e.g. Apple iPhone 3G by Apple Computers). Its touchscreen (49) performs the functions of both the display (26) and the keyboard (21) as well. A peculiarity of this device consists in the necessity to register, in the communicator (52), all the IMDs that are to be connected to it using the wireless technology, which utilizes flows (53) (e.g. electromagnetic flows). Such registration allows avoiding interference of the communicator (52) with the IMDs that are located near the participant (6) and operate in the same wireless communications standard. Another peculiar feature of the three IMDs shown in Fig.7 consists in availability of a built-in display (54). The display (54) may perform the function of displaying such information as available free memory for recording information, number (i) of the current record, etc. Besides, the display (540 may perform the functions of the Readiness Indicator (36). The peculiar feature of the functionality of control units based on PCs and other abovementioned devices consists in the fact that the control program, which is stored in their control Memory 924), is based on an operating system, which comprises a set of system and service utilities relying on the computer's basic software, which is part of its input/output system. The primary function of the operating system is to provide several kinds of interfaces. The principal kinds of interfaces are, first of all, the user interface, the hardware-software interface, and the program interface. The user interface is the interface between the participant (6) and the hardware and software of the computer and the IMDs coupled thereto. The hardware-software interface is the interface between hardware and software of the computer itself and the IMDs coupled thereto. The program interface is the interface between software of the computer and software of the IMDs; the entire software of the IMDs or a portion thereof may be stored in the Control Memory (24). Fig.8 illustrates a user interface, which is created by hardware and software of the computer (without IMDs connected thereto); the control program of such interface comprising software of the IMD and OS Windows. The primary component of the user interface is the start screen (55) with a task bar (56). It accommodates the Start graphic button (57) and the clock (58). The rest of the task bar (56) is used to shape graphic buttons (hereinafter "buttons"), which are related to software of devices coupled to the computer. The start screen is the principal graphic component of almost all modern operating systems. Each application is displayed on the start screen (55) in the form of the appropriate icon (59), under which there is a designation of the respective application (not shown in Fig.8). The abovementioned user interface is called using the mouse (41) and its active control, i.e. the cursor (60), whose movements on the screen are synchronized with movements of the mouse (41). To call an application, one should place the cursor (60) on the appropriate button (59) and click the appropriate button of the mouse (41). Hereinafter, the phrase "to press a button" will mean setting the cursor (60) on the appropriate graphic button and quickly clicking the appropriate button of the mouse (41). Button (61), which is arranged on the task bar (56), is related to the IMD application, which is called using the method described above. Button (61) appears on the task bar (56) as soon as the respective window (62) is called, the said window being part of the user interface, which is used to generate initial information I*(M) or information I(M, k). The window (62) was called by setting the cursor at the graphic button (59) marked with the designation "Omniliner". It can be noted that this designation of the IMD, which is described herein, was registered in many countries, in particular, in the USA (US Certificate No.3627236 for Omniliner trademark), Japan (Japan Certificate No.966795 for Omniliner trademark), and the Russian Federation (Russian Certificate No.348623 for Omniliner trademark). As has already been mentioned above, the user interface is based on the window (62) with a title bar (63) located above it. The title bar (63) accommodates standard size control buttons (64 and 65), window closing button (66), and command buttons bar (67). Besides, the window (62) includes working space (68), a button for saving information Iᵢ(M, k) (69), and fields (70, 71, and 72) for displaying serial numbers of IMDs coupled to the computer. Besides, such fields may be used to select only the IMD, to which information Iᵢ(M, k) is to be saved. Such selection may be carried out, for example, by setting the cursor (60) to one of the fields (70, 71 or 72) and clicking the left button of the mouse (41). Activation of the respective IMD in such a case may be indicated by a change in color of the respective serial number displayed in such field. It can be noted that Fig.8 illustrates only the principal components of the user interface. Among other possible elements are fields for display of the code of M game, and various service buttons that enhance the convenience of entering initial information. Fig.9 shows a user interface, which is generated by software and hardware of both the computer and three IMDs coupled to it, with their respective serial numbers being k = 24734709, k = 89035700, and k = 44734501. It can be seen that fields 70, 71, and 72 display the serial numbers of the IMDs coupled to the computer, and the working space (68) displays r (r = 1, 2, ...) of Multipurpose Input Windows (MIW) (73). The latter are used both to generate initial information I*(M) and to enter true information I(M). Each of the MIW (73) includes a character space (74) to display the r number, an editing field (75) and a True Information Input Button (TIIB) (76). Besides, to select the format of entering initial or true information in the editing field (75), the MIW is provided with a format list line (77). The format list drops down when the list line is selected using the mouse. At the moment of such selection, a format list window appears, from which one of the following formats can be selected (in the parenthesis, the kind of sports or events is specified, for which such format can be used): score (football, hockey, handball, tennis, grass hockey, badminton, boxing, wrestling, ping-pong, basketball, volleyball or water polo); time (track-and-field events, bicycle racing); number of points (artistic gymnastics, figure skating, springboard diving); entering a word; entering digits; entering digits in a table (lottery); interdependent selection "Yes/No" (penalty kicks in football; free throws in football; high jumping). The latter format, which is implemented by means of radio buttons under the words "Yes" and "No", is shown in Fig.9. The fact that the participant (6) has selected the word "Yes" or "No" by the mouse (41) is indicated by a black dot in the center of the circle. The dot appears when the cursor (60) is set by the mouse (41) inside the respective radio button and the appropriate button on the mouse (41) is clicked. If, in the course of playing M game, several MIW (73) appear, a scrollbar (78) for the MIW (73) appears along the right border. The scrollbar (78) for the MIW (73) comprises the following: On the edges, there are buttons with arrows; these are used for slight scrolling of the MIW (73). If one of these buttons is pressed, the MIW (73) will be scrolled in the direction indicated by the arrow. Between the arrow buttons, there is button (79), which may change its size (i.e. be bigger or smaller). Size of button (79) indicates the number of the MIWs (73). Location of button (79) with respect to the scrollbar (78) indicates relative position of the MIW (73) segment relative to the rest of the document. Thus, for example, if button (79) is immediately adjacent to the upper border of the scrollbar (78), this means that the participant (6) is viewing the MIW (73) with r = 1.

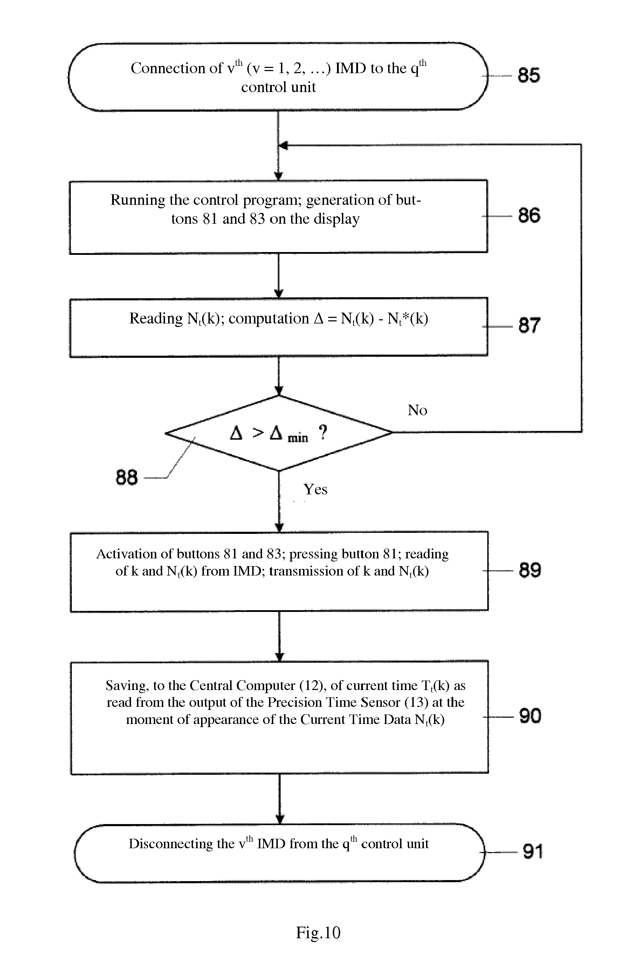

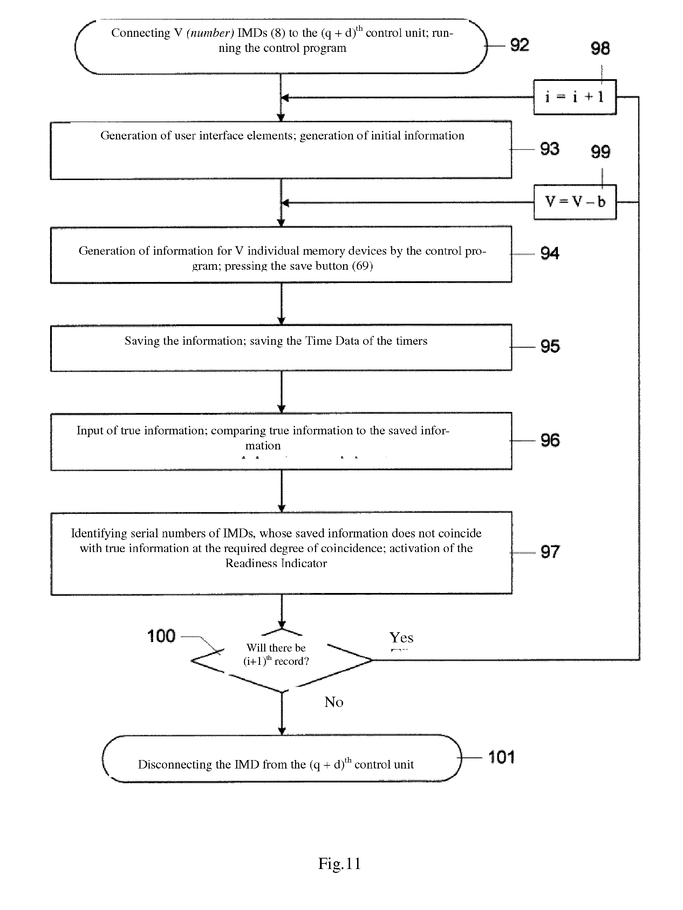

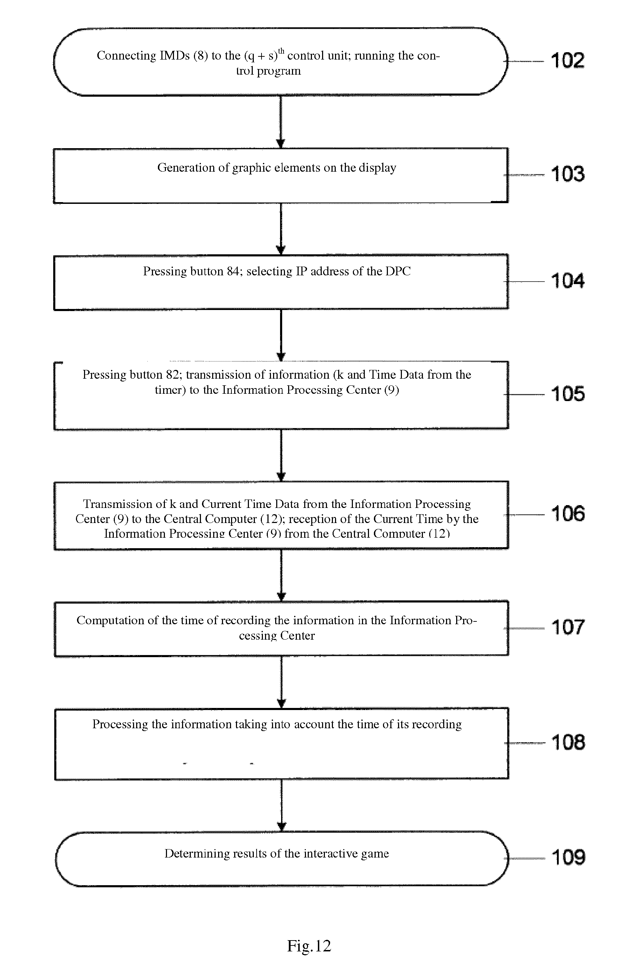

Now let us consider the three graphic elements of the user interface, which are formed by the control program on the command buttons bar (67) after connection of the IMD to the computer. One of such graphic elements is the algorithm list line (rule list line) (80) containing algorithms for generation of information I(M, k). The other two graphic elements are command buttons for transmission of data to the Central Computer and to the Information Processing Center. Command button (81) is used to transmit Current Time Data via the Data Transmission Channel (14) to the Central Computer (12), whereas command button (82) is used to transmit information related to the interactive game (information I(M, k)) via the Return Channel (15) to the Information Processing Center (9). Button (83) is used to select the address of the Central Computer to which the abovementioned data should be transmitted. Similarly, button (84) is used to select the address of the Data Processing Computer. The required address is selected by means of the mouse (41) from several addresses that appear in the address list field after pressing button (83) or (84). If the Internet is used as the Communications Channel (11), Data Transmission Channel (14) or the Return Channel (15), then IP-addresses of the Central Computer and the Data Processing Computer should be used as their respective addresses. The IP-addresses are represented in the form of a 32-bit number, which is used for identifying the Central Computer and the Information Processing Computer in the Internet. To conclude description of the user interface, we may note that in other versions of the interface, each of the IMDs may have its own window (62) with a single field (e.g. field (70)) for displaying the IMD's serial number. When several IMDs are connected to the computer (V>1), their open windows (62) (with the number of said windows being "V") may be arranged diagonally (in a cascade). Such arrangement allows the participant to see the title bar (63) of each window (62). The IIIS operates in accordance with algorithms presented in Fig.10, Fig.11, and Fig.12. Their practical implementation is performed using control programs set in the control units (7), and using special-purpose and standard software, which controls the following devices: IMDs (8), Data Processing Computer (DPC) (10), Central Computer (12), and Identification Computer (19). Fig.10 shows an algorithm for creating parameter values which are needed for computation of the time of the i^{th} record Iᵢ(M, k). Here, the principal parameters are Current Time Data of the timer (34) and current time Tₜ(k), which is read from the output of the Precision Time Sensor (13) at the moment when Current Time Data Nₜ(k) appear. In the IIIS being described, such parameters are generated in the Central Computer (12), and may be created in a voluntary moment of time, i.e. before, after or during the interactive event. Upon completion of action (85), which consists in connecting the v^{th} IMD (8) to the q^{th} control unit, and action (86), which consists in running the control program and appearance, on the display (26), of non-active (low-contrast) buttons (81) and (83), action (87) is implemented, which consists in reading the value of Nₜ(k) and computing the difference of Δ = Nₜ(k) - Nₜ*(k), where Nₜ*(k) = previous value of the Current Time Data. The action (87) is needed in order to limit the frequency of reading the Nₜ(k) data from the IMD, and thus to reduce the load on the Central Computer (12). At Δ > Δₘᵢₙ, where Δₘᵢₙ is the minimum value of the difference ("Yes" in condition (88)), buttons (81) and (83) become activated, and their graphic representation acquires normal contrast. With button (81) pressed, values k and Nₜ(k) are read from the IMD, and are transmitted to the Central Computer (12) (action (89)). Thus, the Current Time Data from the output of the respective timer (34) are transmitted to the Central Computer (12) as soon as they are read by the Control Unit (7) from the respective IMD (8). Current time Tₜ(k) is generated in the Central Computer (12) via action (90). To generate the current time, the Central Computer (12) records and saves Tₜ(k) value as read from the output of the Precision Time Sensor (13) at the moment of appearance of the Current Time Data (Nₜ(k)) in the Central Computer (12). The Current Time Data (Nₜ(k)) are also saved to the memory of the Central Computer (12). With several IMDs connected to the computer, actions (85), (86), (87), (89), and (90) are performed for each of the IMDs. If the participant (6) intends to use a different Control Unit (7) in the interactive game in future, action (91) is performed, which consists in disconnection of the v^{th} IMD (8) from the q^{th} control unit (7). In such a case, further operation of the IIIS is carried out no sooner than after completion of action (92) (Fig.92), which consists in connecting V (number) memory devices to the (q + d)^{th} control unit and running the control program. Action (93) describes generation, by the control program, of elements of the user interface on the display of the Control Unit (7); the said interface intended, in particular, for generating information I(M, k) and transmitting such information to the Information Processing Center (9). Generation of information I(M, k) in accordance with action (94) is performed after generation, in the editing field (75), of initial information I*(M) and the calling, from the list line (80), of a special algorithm, which can be presented, for example, as a positive integer A (A = 1, 2, ...). A special algorithm for conversion of the initial information I*(M) corresponds to each A for the selected format of the initial information recording; such algorithm may be specified, for example, in the manual enclosed to the control program. Thus, interactive game-related information I(M, k) for each of the connected IMDs (8) is generated in the Control Unit (7) by means of conversion of the initial information I*(M) in accordance with the special algorithm included in the control program. It is known that the term "algorithm" is understood as a set of rules that determine a sequence of specified operations, which are required to solve a specific problem. Such operations are performed by a subprogram, which is included in the control program. Now let us illustrate the above notion of algorithm using a specific case. Assume that the participant (6), who has three IMDs (serial numbers: k = 237, k = 962, and k = 2309) wishes to take part in M = 28 game. The game consists in guessing the score of a football match between teams C and D. The initial information I*(M) = I*(28) in the form of the expected score we will present as a vector, i.e. line (c d), where c = the number of goals scored by Team C, and d = number of goals scored by Team D; thus, I*(M) = (c d). Assume that the participant (6) wishes to increase, by means of using a special algorithm "A = 7", the probability of guessing the score of the oncoming match between Team C and Team D, which, in his opinion, will be in favor of Team C. Assume that "A = 7" stands for a special algorithm, purpose of which is to generate, on the basis of the score predicted by the participant (6), three different scores in favor of Team C, with a difference of scored goals higher than that of the initially predicted score, but so that the difference does not exceed three goals. The score initially predicted by the participant will be the first score in favor of Team C. Then the set of rules for the functioning of the special algorithm "A = 7" will consist in two operations implemented by the control program in the Control Unit, the first of such operations being the addition of a single unit to the number of goals scored by Team C (to be set by the participant (6)), and the second operation being addition of two units to the number of goals scored by Team C as well. As a result, after entering the initial information I*(28) = (c d) in the control program of the Control Unit, the following data will be generated as prepared for the first record in the memory (33) of the three IMDs connected to the Control Unit: I₁(28, 237) = (c d); I₁(28, 962) = (c+1 d); I₁(28, 2309) = (c+2 d). Thus, action (94), which consists in generating, for each of the connected IMDs (8), interactive game-related information Iᵢ(M, k), which is comprised of several records, is performed in the Control Unit (7) by means of conversion of the initial information I*(M) in accordance with the special algorithm included in the control program. When the save button (69) is pressed, the respective generated information is saved to all IMDs; simultaneously, Time Data of all timers, which are part of the appropriate IMDs, are saved (action (95)). If, in accordance with the interactive game conditions, it is required to have i guessed data records, the participant may exclude, from the process of further data saving, the IMDs where the saved data failed did not coincide with the true data I(M). Such exclusion may be implemented as soon as: (first) action (96) is completed, which consists in input, to the Control Unit, of true information and comparing such information to the one stored in each of the IMDs connected to the Control Unit; and (second) action (97) is completed, which consists in identifying serial numbers of the IMDs, in which saved information does not coincide with the true information taking into account the required degree of coincidence. In the simplest case, the degree of coincidence may be characterized by the number "Y", which determines the allowable number of records containing saved information Iᵢ(M, k), which does not coincide with true information. In such a case, the IMDs (8) may be displayed (for example, by means of flashing Readiness Indicators (36)), serial numbers of which were identified by the Control Unit (7). The abovementioned exclusion b (b = 1, 2, ...) of an IMD after (i + 1)^{th} record (action (98)) is represented as action (99). It can be noted that the saving of (i + 1)^{th} record to the memory (33) of the IMDs, serial numbers of which were identified by the Control Unit (7), can be disabled, if necessary. If, after the i^{th} record, the interactive game is stopped ("No" selected in condition (100)), and the (q + d)^{th} control unit has no available means for transmitting information from the respective IMD to the Information Processing Center, then action (101) is implemented, which consists in disconnecting such IMD from the (q + d)^{th} control unit. In this case, further operation of the IIIS is continued after completion of action (102) (fig.12), which consists in connecting the respective IMD to the (q + s)^{th} control unit. After the running of the control program, graphic elements are generated on the display, which are related to connection of the control unit to the Information Processing Center (9) and to transmission of information saved in the IMD to the Information Processing Center (9) (action (103)). Such elements include buttons (82) and (84). As has already been mentioned, button (84) is used to select the address of the Data Processing Computer (DPC) (action (104)), which is part of the Information Processing Center, whereas button (82) is used to generate the transmission command. As soon as action (105) is completed, which consists in pressing button (82), information I(M, k), which is saved in the memory, is transmitted to the Information Processing Center; k value and Time Data N(i, k) of the timer (34), which is part of the IMD having serial number k are also transmitted to the Information Processing Center. In another version of implementation of the IIIS, action (105) may consist in transmitting solely the serial number (k) and information I(M, k). Action (105) may be performed either for all IMDs connected to the Control Unit or only for those selected by the participant (6) by clicking the appropriate field (70, 71 or 72). Then, action (106) is performed, which consists in transmitting, from the Information Processing Center (9) to the Central Computer (12), values of k and Nₜ(k), and receiving for them, from the Central Computer (12) via the Communications Channel (11), values of Tₜ(k) and (k) in accordance with action (106). If, for all the IMDs, the frequency remains constant, then only Tₜ(k) is received from the Central Computer (12), whereas f(k) is read from the database stored in the memory of the DPC (10). Time T(i, k) of saving information Iᵢ(M, k) is computed, in accordance with action (107), in the Information Processing Center (9) per the following formula: T(i, k) = Tₜ(k) + [1 / f(k)] x [N(i,k) - Nₜ(k)]. Action (108), which consists in processing the information transmitted to the Information Processing Center (9) (taking into account the time of saving of such information), is performed after the receiving of true information I(M) and time of its occurrence T[I(M)] by the Information Processing Center (9). True information I(M) is transmitted to the Information Processing Center (9) from the True Information Source (TIS) (1) via the Information Transmission Channel (16). The value of T[I(M)] may be saved either in the TIS (1) or directly in the Information Processing Center (9). Result of M interactive game, after completion of action (109), may be placed, for example, in the Web page at the Web server, which may be coupled with the Information Processing Center (9) via the Internet. In the simplest case, the abovementioned processing of information I(M, k) consists in comparing such information (with the pre-selected degree of coincidence) solely with the true information I(M), which was saved to the TIS (1) after the recording of information to the IMD, i.e. T (i, k) < T[I_{z}(M)], where T[I_{z}(M)] = time of recording of the z^{th} action included in the true information consisting of Z actions. Here, the number of the i^{th} record represents the information, which is recorded to the IMD, and is predicting the z^{th} action. Further operation of the IIIS consists in identifying the IMD (8) so that the participant (6) could receive or confirm his/her winnings in M game. It should be noted that "identification" is understood as detection of a certain object (in particular, the IMD) by its characteristic features. Such features, according to EA Patent No.010454, include, in particular, the serial number (k) and the saved information I (M, k). Identification is carried out by the Identification Computer (19) after the values of k and I (M, k) are read to it from two sources (the IMD and the DPC). To read such data from the IMD, the latter is coupled to the Identification Computer (19) via the AICU (30). From the DPC (10), the values of k and I(m, k) are read by means of transmission to the Identification Computer via the Lossless Channel (18). To confirm correctness of the recorded information I(M, k), equality of the abovementioned data as received from the DPC (10) and as read directly from the IMD should be verified by the Identification Computer (19). Now let us consider an example illustrating the operation of the system described above. In our example, we will assume two IMDs (8) (V = 2; k = 2847, and k = 3427) connected to a single Control Unit (7) (q = 1, s = 0, d = 0) designed as a PC (see Fig.4), which is connected to the Internet and working under the Control Program, whose user interface is shown in Fig.8 and Fig.9. The database of the Central Computer (2) contains serial numbers of all registered IMDs as well as frequencies f(k) of their timers (34), which, in our case, are equal to 34 Hz (i.e. f(k) = f(2847) = f(3427) = 10 Hz). Prior to starting the game, the participant (6) pressed button (81) to connect the PC to the Central Computer (12), and transmitted, to the input of the Central Computer (action (89)), serial numbers k = 2847 and k = 3427, and the Current Time Data Nₜ(k) = Nₜ(2847) = 86400000, Nₜ(k) = Nₜ(3427) = 286400327 from the output of the timers of the IMDs with serial numbers k = 2847 and k = 3427, respectively. Before pressing button (81), IP address of the Central Computer (12) was selected by means of interaction with button (83) and selecting, by means of the mouse (41), the following IP address from the list of IP addresses: 182.17.212.98. At the moment of receiving and saving the Current Time Data Nₜ(2847), the memory of the Central Computer (12) recorded and saved (accurate to 1 second) the current time Tₜ(k) = Tₜ(2847) = March 6, 11 h 22 min 44 s (action (90)) as read from the output of the Precision Time Sensor (13) at the moment of appearance of the Current Time Data. Similarly, the current time Tₜ(k) = Tₜ(3427) = March 6, 11 h 22 min 59 s was recorded. Assume that the participant (6) takes part in an interactive game (M = 47), which comprises two actions (Z = 2), which are related to two penalty kicks in a football match broadcasted on the TV (2). The true information I(47) in the form of results of the penalty kicks (I₁(47) and I₂(47)) (both penalty kicks resulted in scoring a goal) and the moments of time T[I₁(47)] = March 6, 12 h 23 min 49 s and T[I₂(47)] = March 6, 12 h 33 min 59 s when the penalty kicks were initiated were entered by the operator of M = 47 game to the memory of the DPC (10). To receive the winnings, the participant has to guess the results of both penalty kicks and then to submit the respective IMD to the Identification Point (17). Assume that the participant (6) wishes to increase the probability of guessing the results of the penalty kicks by using a special algorithm A = 4, which is called from the algorithm list line (80). Assume that "A = 4" is an algorithm, specific purpose of which is to generate, for the two IMDs, from the initial information I*(47) (which was recorded by the participant (6) in the form of "Yes" or "No" (Fig.9)), information in the form of "Yes" for one of the IMDs, and information in the form of "No" for the other IMD. In such a case, only for one of the IMDs, which are coupled to the Control Unit (7), the initial information I*(47) becomes equal to the information, which is saved to the memory of the same IMD (i.e. I*(M) = I (M, k)). Furthermore, the participant (6) entered the maximum number (Y = 0) of non-coincidences between the saved and the true information (i.e. non-coincidences between the saved and the true information are not acceptable). Assume that the participant (6), before the first penalty kick, generated, by means of radio buttons, the initial information I*(47) as "Yes", and then pressed the save button (69). Thus, information Iᵢ(M, k) = I₁(47, 2847) in the form of a binary value corresponding to "Yes" was recorded to the memory of the IMD with serial number k = 2847, whereas information Iᵢ(M, k) = I₁(47, 3427) in the form of a binary value corresponding to "No" was recorded to the memory of the IMD with serial number k = 3427. Simultaneously with the recording of information I₁(47, 2847), the Time Data (N(i, k) = N (1, 2847) = 86436630) were recorded to the memory of the IMD (action (95)). After completion of the first penalty kick, the participant (6) entered its result (i.e. true information I₁(47) for the first action) in the Control Unit (action (96)). This result was entered by pressing the True Information Input Button (TIIB) (76), setting the radio button to "Yes", and pressing the save button (69). Since the information stored in the IMD with serial number k = 3427 did not coincide with the true information, its Readiness Indicator (36) became deactivated (action (97)), thus indicating, for the participant (6), the possibility to disconnect such IMD from the Control Unit. Before the second penalty kick, the participant (6) disconnected the IMD with serial number k = 3427 from the Control Unit, generated, by means of radio buttons, initial information I*(47) as "Yes", and pressed the save button (69). Thus, information Iᵢ(M, k) = I₂(47, 2847) in the form of a binary value corresponding to "Yes" was recorded to the memory of the IMD with serial number k = 2847. Simultaneously with the recording of information I₁(47, 2847), the Time Data (N(i, k) = N (2, 2847) = 86442680) were recorded to the memory of the IMD. Upon completion of the game, the participant (6) pressed button (82) (action (104)) to connect the PC to the Information Processing Center (9), and transmitted, via the Return Channel (15) (action (105)), the following data (as saved in the IMD throughout the game) to the input of the Information Processing Center (9): k = 2847, N (1, 2847), N (2, 2847), I₁ (47, 2847), and I₂ (47, 2847), Before pressing button (82), the participant selected the IP-address of the Information Processing Center (9) by interacting with button (84) and selecting, by means of the mouse (41), the following IP address from the list of IP addresses: 213.87.83.112. Further operation of the IIIS consisted in computation of the time of records I₁ (47, 2847) and I₂ (47, 2847). For this purpose, the value of k = 2847 was transmitted from the Information Processing Center (9) to the Central Computer (12) via the Communications Channel (11), and the following data were received from the database of the Central Computer (12) and its memory: Tₜ(k) = Tₜ(2847) = March 6, 11 h 22 min 44 s; Nₜ(k) = Nₜ (2847) = 86400000; f(k) = f(2847) = 10 Hz. These data allowed the DPC (10) to compute the time of recording the members I₁ (47, 2847) and I₂ (47, 2847) from the following equation: T(i, k) = Tₜ(k) + [1 / f(k)] x [N(i,k) - Nₜ(k)]. Thus, for records I₁ (47, 2847) and I₂ (47, 2847), the time of recording is: T (i, k) = T (1, 2847) = Tₜ (2847) + [1 /f(2847)] x [N(1, 2847) - Nₜ(2847)] = March 6 11 h 22 min 44 s + (1/10) x (86436630 - 86400000) = March 6, 12h 23 min 47 s; T (i, k) = T (2, 2847) = Tₜ (2847) + [1 / f(2847)] x [N(2, 2847) - Nₜ(2847)] = March 6 11 h 22 min 44 s + (1/10) x (86442680 - 86400000) = March 6, 12h 33 min 52 s. The processing of information taking into account the time of its recording consisted in action (108), i.e. verifying, in the DPC (10), compliance with the conditions, at which the information saved in the IMD may be considered recorded before initiation of the penalty kicks. Since, in our case, T (1, 2847) < T [I₁ (47)], and T (2, 2847) < T [I₂ (47)], i.e. conditions of the interactive game are met, determining the results of the interactive game (action (109)) consisted in placing, at the site of the game operator (www.oper477.com), of the IMD serial number (k = 2847) and sum of the reward, and in transmitting the identification data (such as k = 2847, I₁ (47, 2847), and I₂ (47, 2847)) to the input of the Identification Computer (19) via the Lossless Channel (18). If, after connection of the IMD with serial number k = 2847 to the Identification Computer (19), such data coincide with the respective data stored in the memory of the IMD, the participant (6) will be entitled to receive the reward as published at the site of the game operator.

### Industrial Applicability

The invention can be used in such events as multifarious lotteries and sport totalizators, and in remote training. The possibility to use, for an individual memory device, a large number of control units (in particular, those of mobile design, such as netbooks, smartbooks, communicators, cameraphones or smartphones) provides additional advantages for users who take part in interactive games directly at the location of such games (e.g. stadiums or classrooms). An essential advantage of the invention consists in the fact that a participant may use several individual memory devices connected to a single control unit.

## Claims

1. The system for conducting interactive games, which comprises a central computer (12), which is coupled to a data transmission channel (14) and to a precision time sensor (13), and is connected, via a communications channel (11), to an information processing center (9), which is coupled to a return channel (15); in addition, the system comprises individual memory devices (8), each of which is designed for memorizing information relating to the interactive game and generated by the participant (6) of such game, and comprises a microprocessor (32), a memory (33), and a timer (34), which are interconnected. The difference of the said system consists in the fact that it comprises a specific number of control units (7), each of which has an auxiliary microprocessor (22), which is connected to a set number of data interchange adapters (25), a display (26), a control memory (24), and an input device (20). Furthermore, each individual memory device (8) has an adapter for interfacing with the control unit (30), it being possible for said adapter to be coupled to any desired data interchange adapter (25). The adapter for interfacing is connected to the microprocessor (32), the memory (33), and the timer (34); the respective control units (7) of individual memory devices (8) comprise an adapter for data transmission channel (28), which is coupled to the auxiliary microprocessor (22), and an adapter for the return channel (29), which is connected with the auxiliary microprocessor (22) as well.

2. The system, as per Claim 1, is different in that the control unit (7) is designed as a personal computer (4) or a palm digital assistant (PDA) (48).

3. The system, as per Claim 1, is different in that the control unit (7) is designed as a mobile phone or a communicator (52).

4. The system, as per any of the Claims 1 thru 3, is different in that the data interchange adapter (25) and the adapter for interfacing with the control unit (30) are designed as wireless adapters.

5. The system, as per any of the Claims 1 thru 3, is different in that the individual memory device (8) includes a readiness indicator (36), which is used to indicate the status of readiness for saving the information as transmitted from the control unit (7) coupled to the individual memory device (8).

6. The system, as per any of the Claims 1 thru 3, is different in that the individual memory device (8) includes a built-in power source (37), which is connected to the timer (34); furthermore, all other components of the individual memory device (8) are connected to the power source (27) of the control unit (7) via the adapter for interfacing with the control unit (30) and the data interchange adapter (25).

7. The system, as per Claim 6, is different in that the built-in power source (37) of the individual memory device (8) is designed as a solar battery.

8. The system, as per Claim 6, is different in that the built-in power source (37) of the individual memory device (8) is designed as an accumulator of electrical energy, which has provisions for coupling to the power source (27) of the control unit (7) via the adapter for interfacing with the control unit (30) and the data interchange adapter (25).

9. The method for use of the system, which comprises the components described in Claim 1 above, consists in that each participant (6) of the interactive game uses the specific number of individual memory devices (8), each of which has a serial number and is intended for concurrent recording, to its memory (33), of the time data from the timer (34), and information related to the interactive game; besides, the instants of time at which such information was recorded are computed (action 107) by the central computer (12) coupled to the precision time sensor (13) (as soon as current time data from the timer (34) are transmitted (action 89) to the computer (12) via the data transmission channel (14)) and by the information processing center (9) coupled to the central computer (12) (as soon as time data and appropriate information, which is stored in the memory of the individual memory devices (8), are transmitted (action 105) to the information processing center via the return channel), and is different in that there is a control program, which is stored in the control memory (24), and is used to generate (action 93), on the display of the control unit (7), elements of the user interface; furthermore, generation (action 94) of interactive game-related information for each of the individual memory devices (8) is carried out in the control unit (7) by means of conversion of the initial information in accordance with a special algorithm included in the control unit.

10. The method, as per Claim 9, is different in that in the course of the interactive game, true information is recorded, which is, first, entered (action 96) from the input device of the control unit (7) to its control memory (24), and, second, compared in the control unit (7) with information stored in the memory (33) of the individual memory devices (8); then, serial numbers of the of the individual memory devices (8) are identified (action 97), whose stored information does not coincide with the true information, with the required degree of coincidence.

11. The method, as per Claim 10, is different in that the saving of information to the memory (33) of the individual memory devices, serial numbers of which were identified by the control unit (7), can be disabled.

12. The method, as per Claim 10, is different in that the individual memory devices (8) may be displayed (for example, by means of flashing readiness indicators (36)), serial numbers of which were identified by the control unit (7).

13. The method, as per any of the Claims 9 thru 12, is different in that the control program is used to generate, on the display, elements of the user interface, which are used to connect the control unit (7) to the central computer (12) via the data transmission channel (14); in this case, the current time data from the output of the respective timer (34) are transmitted to the central computer (12) after they are read (action 89) to the control unit from the respective individual memory device (8).

14. The method, as per any of the Claims 9 thru 12, is different in that the control program is used to generate (action 103), on the display, elements of the user interface, which are used to connect the control unit (7) to the information processing center (9) via the return channel (15); in this case, the information stored in the memory (33) is transmitted (action 106) to the information processing center (9) after such information is read to the control unit from the respective individual memory device (8).
